# EUROPEAN PATENT APPLICATION

(11) **EP 4 764 252 A1**
(43) Date of publication of application: **24.06.2026**
(21) Application number: 25218569.9
(22) Date of filing: 26.11.2025
(51) Int. Cl.: F16H 21/54, B25J 15/02

(54) **LINKAGE SYSTEM AND METHOD FOR CONVERTING ROTATIONAL MOTION TO LINEAR MOTION**

(30) Priority: 18.12.2024 US 202463735558 P
(71) Applicant: MacDonald, Dettwiler and Associates Inc., Brampton, Ontario L6Y 6K7 (CA)
(72) Inventor: EDWARDS, John Duncan, Brampton, L6Y 6K7 (CA); LAUSCH, Ryan Craig, Brampton, L6Y 6K7 (CA); BASSALIOUS, Mina, Brampton, L6Y 6K7 (CA); NARRA, Bala Krishna, Brampton, L6Y 6K7 (CA); GAREL, Lucas, Brampton, L6Y 6K7 (CA)
(74) Representative: Mewburn Ellis LLP

(57) **Abstract**

Provided is systems and methods for converting rotational motion to linear motion. The system includes a rotor (204), a translator (202), wherein the translator translates axially along a rotation axis of the rotor, and a plurality of linkages arranged around the rotation axis on a linkage system that connect the rotor to the translator and that translate rotation of the rotor into translation of the translator.

## Description

### Technical Field

The following relates generally to linkage systems, and more particularly to linkage systems and methods for converting rotational motion to linear motion.

### Introduction

Linkage systems and methods for converting rotational motion into linear motion may be used in a variety of technologies. These technologies may including robotic systems and/or robotic interfaces. Robotic interfaces include grapple fixtures and end effectors (see, e.g., US Patent Numbers 4,929,009 entitled End Effector granted May 29, 1990 and 4,929,011 entitled Grapple Fixture granted May 29, 1990).

Robotic interfaces include contact operations between an end effector and a grapple fixture. The contact operations may include the steps of (1) probe funneling to bring a probe of the grapple fixture into the end effector, (2) initial capture of the probe within the end effector, (3) closing of the interface by retracting the probe into the end effector, and (4) rigidization of the interface to secure the connection between the grapple fixture and the end effector.

End effectors may include linear motion mechanisms for the purpose of closing the interface (mating grapple fixture and end effector). End effector mechanisms may need high speed/low torque for the retraction portion of their stroke where the end effector mechanism is mating to a grapple fixture into the end effector. Then the end effector mechanism may need high torque/low speed as the end effector mechanism approaches the rigidization portion of their stroke.

Existing systems with fixed speed/mechanical advantage perform less optimally at all points in their stroke/range of motion, because their mechanical advantage is fixed across the whole stroke. Existing systems include a lead screw/nut or ball screw/nut. These existing systems have constant mechanical advantage and speed (dictated by the pitch of the screw). A lead screw/ball screw optimised to produce the required torque near rigidization point will operate very slowly in the retraction portion of the stroke. A lead screw/ball screw optimised for fast pull-in will not have the required torque to rigidize. This means ball screw/lead screw systems have motors that can produce both high speeds and high torques, which means larger motors than would be desirable for a mechanism with tunable mechanical advantage.

Existing systems may not be able to provide high speed/low mechanical advantage regime. Existing systems may be limited due to the use of brakes and therefore brake power dissipation during operation, as well as mass, cost, complexity, increased volume which reduces dexterity of end effector, and due relatively lower mechanical advantage during rigidization. Existing systems may be limited due to rigidization set-point being dictated by a current threshold. Existing systems may be limited economically and reliably due to high part count and the inclusion of brakes, power consumption, mass, and volume. Existing systems may be limited because they have large length. This is noteworthy for end effectors since longer tip link lengths generally mean less dexterity and more motion for a given angular travel of wrist joint. This also makes them less precise and have longer distance between force-moment sensor and tip.

Accordingly, there is a need for an improved system and method for transforming rotational power into high-speed, high-torque linear motion that overcomes at least some of the disadvantages of existing systems and methods.

### Summary

Provided is a system for converting rotational motion to linear motion. The system includes a rotor, a translator, wherein the translator translates axially along a rotation axis of the rotor, and a plurality of linkages arranged around the rotation axis on a linkage system that connect the rotor to the translator and that translate rotation of the rotor into translation of the translator.

A linkage in the plurality of linkages may include a link that connects the rotor to the translator. The linkage may include an input spherical bearing that pivotably connects the link to the rotor. The linkage may include an output spherical bearing that pivotably connects the link to the output translator.

Rotating the rotor about a rotation axis relative to the translator may cause the link to reconfigure from a planar arrangement towards a parallel arrangement.

The link may passe over-center before rotation of the rotor is arrested by a hard stop, inhibiting further retrograde translation of the translator.

The rotor may be actuated by a motor. The motor may drive rotation of the input rotor via a drive mechanism.

The translator may include a slider that inhibits the translator from rotating and allows the translator to slide axially.

The rotor and/or the translator may include state sensing electrical contacts.

The link may include a first spherical bearing ball, a second spherical bearing ball, and a connecting shaft that connects the first spherical bearing ball to the second spherical bearing ball. The first spherical bearing ball may be rotatably positioned in a corresponding spherical bearing socket of the translator. The second spherical bearing ball may be rotatably positioned in a corresponding spherical bearing socket of the rotor.

Provided is a system comprising a first object that connects with a second object at a separable interface and a linkage system comprising a rotor, a translator, wherein the translator translates axially along a rotation axis of the rotor, and a plurality of linkages arranged around the rotation axis on the linkage system that connect the rotor to the translator and that translate rotation of the rotor into translation of the translator.

The first object may be an end effector and the second object may be a grapple fixture.

Provided is a method for converting rotational motion to linear motion. The method includes rotating a rotor about a direction of motion of a translator to separate the translator from the rotor, and pivoting links away from the rotor and the translator as the translator moves linearly away from the rotor.

The method may further include sliding the translator away from the rotor, and holding the links in the rotor and the translator to a separated position.

The method may further include rotating the rotor with respect to the translator in an opposite direction than the first direction, pivoting the links towards the rotor and the translator, and sliding the translator slides towards the rotor.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figures 1A and 1B are block diagrams of a dexterous grapple system, according to an embodiment;
Figures 2A and 2B are drawings of a linkage system in a collapsed position and a separated position, respectively, according to an embodiment;
Figures 3A and 3B are front and back perspective views of a translator of the linkage system of Figures 2A and 2B;
Figures 4A and 4B are back and front perspective views of a rotor of the linkage system of Figures 2A and 2B;
Figure 5 is a perspective view of a link of the linkage system of Figures 2A and 2B;
Figure 6 is a perspective view of a slider of the linkage system of Figures 2A and 2B;
Figure 7 is a perspective view of a channel of the linkage system of Figures 2A and 2B;
Figure 8 is a flow chart of a linkage method, according to an embodiment;
Figures 9A to 9J illustrate partial views of a robotic mating system, according to an embodiment; and
Figure 10 is a flow chart of a robotic mating method, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

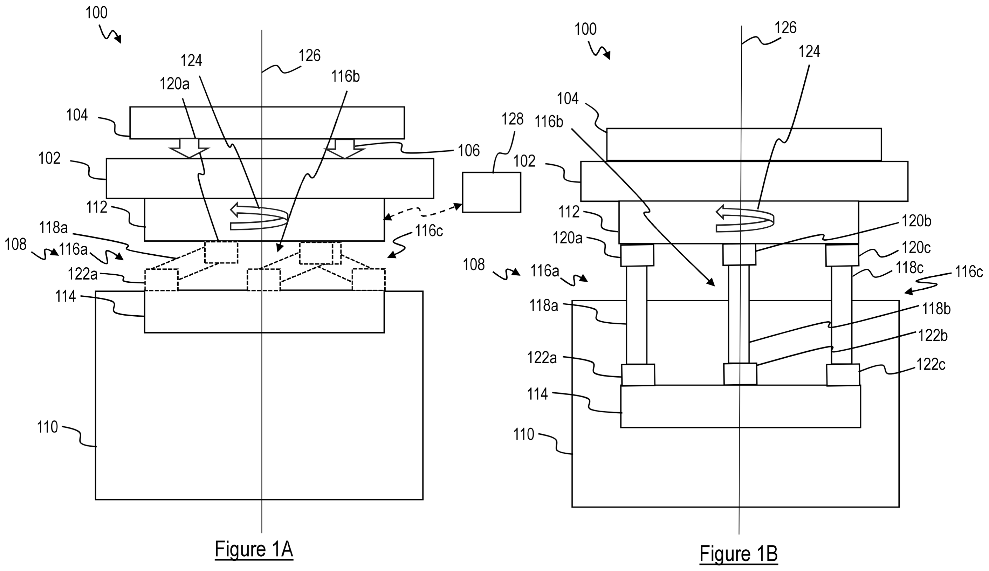

Referring to Figures 1A and 1B, described therein is a dexterous grapple system 100 for transitioning from an initial uncaptured state, to soft capture, to a rigid capture, in accordance with an embodiment.

The dexterous grapple system 100 includes a first object 102 that connects with a second object 104 along direction 106 at a separable interface. The first object 102 may be an end effector such as a dexterous end effector. The second object 104 may be a grapple fixture.

The grapple system 100 includes a linkage system 108 (or linkage cam system) that connects the rotor 112 to the translator 114. The linkage system 108 translates rotation of the rotor 112 into translation of the translator 114. The linkage system 108 creates a rigid mechanical connection at the separable interface to a housing 110. The housing 110 may attach to a robotic arm.

The linkage system 108 includes an annular input rotor 112. The linkage system 108 includes an annular output translator 114. The annular output translator 114 translates axially along a rotation axis 126 of the rotor 112. The rotational axis 126 of the rotor 112 may be coincident with a cylindrical axis of the housing 110.

The linkage system 108 includes a plurality of (three are shown) linkages 116a, 116b, 116c. The linkages 116a, 116b, 116c are arranged around the rotation axis on the linkage system 108 to translate rotation of the rotor 112 into translation of the translator 114. The linkages 116a, 116b, 116c may be arranged around the circumference of the linkage system 108.

Each of the linkages 116a, 116b, 116c include a link 118a, 118b, 118c that connects the input rotor 112 and output translator 114. Each of the linkages 116a, 116b, 116c include input spherical bearings 120a, 120b, 120c that pivotably connect the respective links 118a, 118b, 118c to the input rotor 112. Each of the linkages 116a, 116b, 116c include output spherical bearings 122a, 122b, 122c that pivotably connect the respective links 118a, 118b, 118c to the output translator 114. In an alternative embodiment, the spherical beings may be implemented with universal joints.

The rotor 112 may be rotatably 124 actuated about axis 126 by motor 128 (shown schematically). The motor 128 may drive rotation of the input rotor 112 via a drive mechanism such as meshing gears. In certain embodiments, the rotor 112 is rotatably 124 actuated by any one or more of manual actuation, actuation by nichrome wire, and linear actuator.

Rotating 124 the input rotor 112 about rotation axis 126 relative to the output translator 114 causes the links 118a, 118b, 118c to reconfigure from a planar arrangement (shown in Figure 1A) towards a parallel arrangement at top dead center (shown in Figure 1B). In an embodiment, the angular travel of the links 118a, 118b, 118c, may be approximately 80 degrees. Rotating 124 the input rotor 112 causes the linkage system to be kinematically reconfigured. The initial configuration is an arrangement where the links 118a, 118b, 118c lie roughly in a single plane, forming a triangle. In the final configuration the links 118a, 118b, 118c are parallel and form a triangular prism, with spherical bearing balls at the vertices of the prism.

The angular travel is limited in both directions by hard stops between the input rotor 112 and a stationary portion of the end effector (e.g. housing).

The linkages 118a, 118b, 118c, may pass over-center by a small amount (e.g., 3 degrees) before the retraction hard stop comes into contact with the input rotor 112. Compressive force acting to collapse the linkage system 108 causes it to 'lock' into place. This locked position is tuned to produce the desired compression of the system 100. Additionally this compression may be controlled by spring(s) (e.g., Belleville spring(s)).

The linkage system 108 converts rotation 124 and torque into linear motion and force. The linkage system 108 may provide improved performance with fewer parts and simple packaging.

The function of the grapple mechanism of the dexterous end effector 102 is to create a rigid mechanical connection at a separable interface 106. The end effector 102 applies a linear tensile force to the grapple fixture 104 so that the interface 106 can transmit loads without separation. The end effector 102 is actuated by the motor 128 to produce rotary motion 124 and torque.

The end effector 102 may perform the capture, rigidization, de-rigidization, and release of the grapple fixture 104.

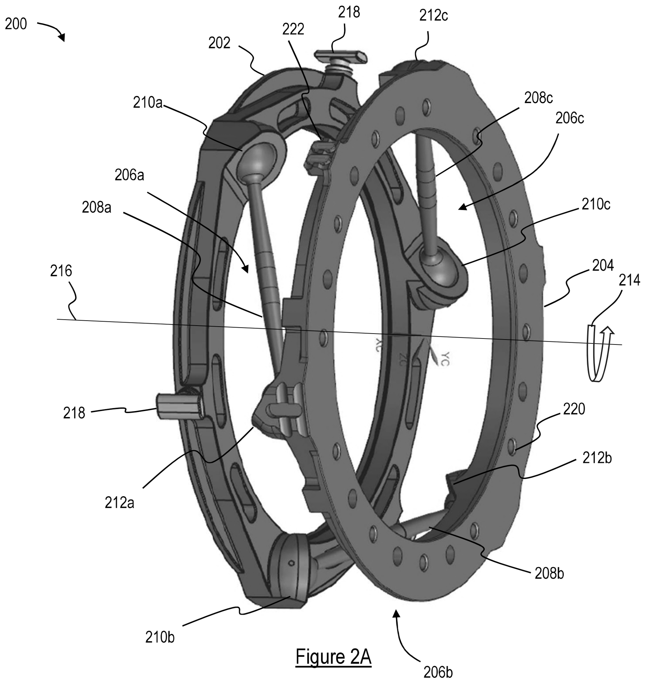

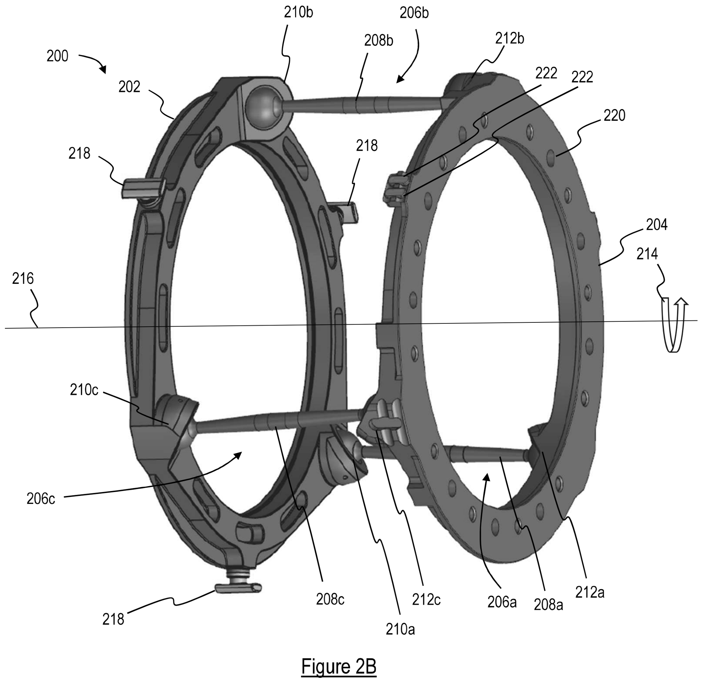

Referring to Figures 2A and 2B, described therein is a system 200 for linkage cam mechanism for a dexterous grapple system, according to an embodiment. Figure 2A illustrates a collapsed position. Figure 2B illustrates a separated position.

The linkage system 200 creates a rigid mechanical connection at the separable interface. The linkage system 200 includes a translator 202. The linkage system 200 includes a rotor 204.

The linkage system 200 includes a plurality of (three are shown) linkages 206a, 206b, 206c. The linkages 206a, 206b, 206c are arranged around the rotation axis on the linkage system 200. The linkages 206a, 206b, 206c may be arranged around the circumference of the linkage system 200.

Each of the linkages 206a, 206b, 206c include a link 208a, 208b, 208c that connects the translator 202 and rotor 204. Each of the linkages 206a, 206b, 206c include output spherical bearings 210a, 210b, 210c that pivotably connects the link 208a, 208b, 208c to the translator 202. Each of the linkages 206a, 206b, 206c include input spherical bearings 212a, 212b, 212c that pivotably connects the link 208a, 208b, 208c to the rotor 204.

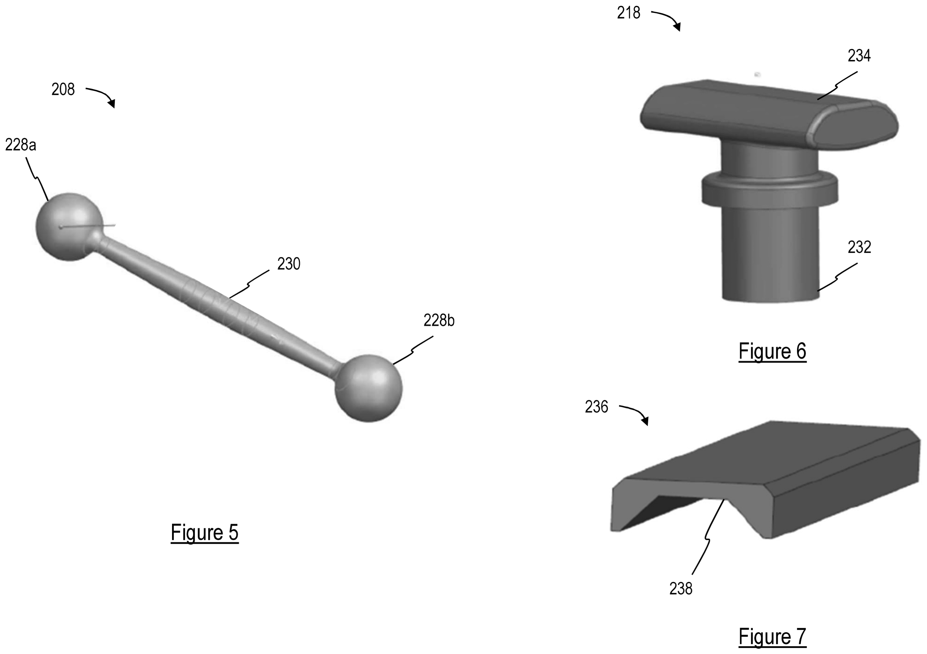

The linkage system 200 includes a slider 218 (see Figure 6) that inhibits the translator from rotating and allows the translator to slide parallel to the axis of input rotor rotation. The linkage system 200 includes holes 220 for bolting the input rotor and output translator to adjacent parts in the assembly. The linkage system 200 includes a contact for contacting state sensing electrical contacts.

The linkage system 200 may provide benefits for use with a dexterous end effector. The linkage system 200 may have variable mechanical advantage across a range of motion due to the kinematics of the linkage system 200. The translator 202 may move quickly for a given rotational input 216 near the collapsed configuration (Figure 2A) having low mechanical advantage. The linkage system 200 may move slowly near top dead center (Figure 2B) where the mechanical advantage is very high. Advantageously, this may allow very high preloads to be produced near top dead center without needing to gear down the whole drivetrain. Advantageously, this may reduce mechanism and motor module mass and volume and improve cycle times.

During rigidization, the linkage system 200 is typically allowed to travel a short distance beyond top dead center before the linkage system 200 hits a hard stop. Advantageously, this state is passively stable and therefore no brakes may be needed in the mechanism or motor module to maintain a rigidized state. Advantageously, this further reduces mass, power dissipation, and heating, and improves reliability and packaging.

The linkage system 200 may be hollow so that mechanical aspects may pass through the center. The linkage system 200 may have a small length and volume footprint. These characteristics may be advantageous for applications that have strict length and volume constraints. For example, where packaging a traditional ball screw/nut is not possible. The linkage system 200 may provide a lightweight, simple, reliable, compact, hollow mechanism that delivers the same basic functionality as a ball screw/nut that may be about one half of the length.

The linkage system 200 may satisfy a number of different functional requirements and provide several performance benefits over existing systems. The linkage system 200 may provide flexibility and tunability while eliminating ball screws from existing systems.

Compared to alternative approaches, the linkage system 200 may perform faster due to high speed/low mechanical advantage regime. Compared to alternative approaches, the linkage system 200 may perform more efficiently due to no brakes being used, and therefore no brake power dissipation during operation, and also due to high mechanical advantage in the rigidization regime. Compared to alternative approaches, the linkage system 200 may perform more predictably due to rigidization set-point being dictated by a hard stop rather than needing to work to a current threshold. Compared to alternative approaches, the linkage system 200 may perform more economically and reliably due to lower part count and lack of brakes. Compared to alternative approaches, the linkage system 200 may have a more compact, hollow, lightweight, and simple package. Advantageously, in some embodiments the linkage system 200 may be implemented with as few as five parts (202, 204, 206a, 206b, 206c), of which three are unique.

The linkage system 200 may be used wherever rotary motion needs to be converted into linear motion and high force produced in a small package. The linkage system 200 may be particularly well-suited to applications where the speed/force needs of the mechanism are inverted at opposite ends of the range of motion.

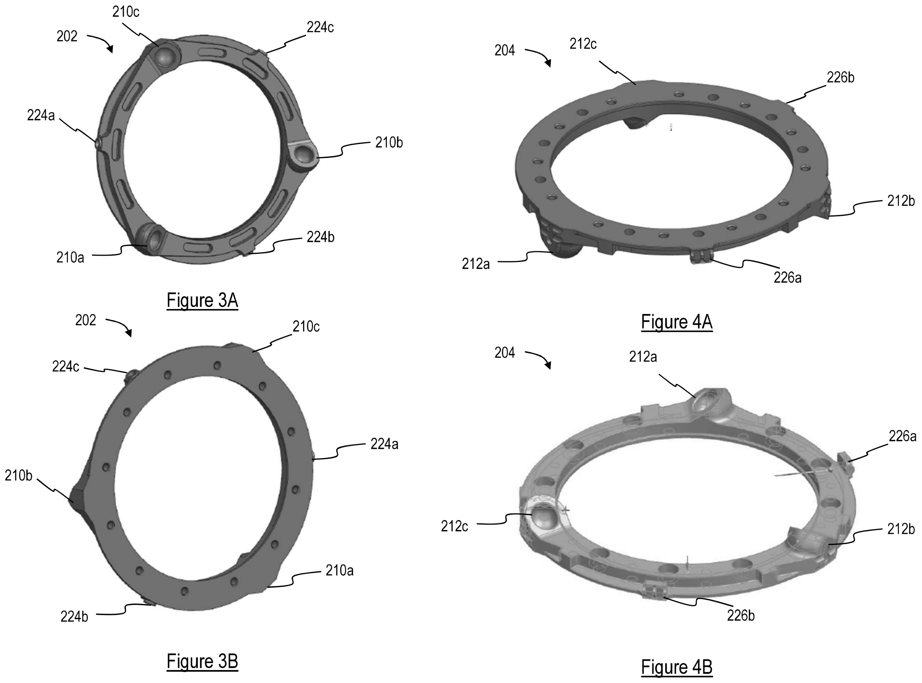

Referring to Figures 3A and 3B, shown therein is the translator 202 of the linkage system 200 of Figures 2A and 2B. The translator 202 includes three output spherical bearing sockets 210a, 210b, 210c that pivotably receive the respective links (118a, 118b, 118c). The spherical bearing sockets 210a, 210b, 210c may be positioned equidistantly around the translator 202. The output spherical bearing sockets 210a, 210b, 210c have a directional stop so that they only allow pivoting of the link (118a, 118b, 118c) in one circumferential direction.

The translator 202 includes slider attachments 224a, 224b, 224c that connect to the sliders 218. The slider attachments 224a, 224b, 224c may be positioned equidistantly around the translator 202.

Referring to Figures 4A and 4B, shown therein is the rotor 204 of the linkage system 200 of Figures 2A and 2B. The rotor 204 includes three input spherical bearing sockets 212a, 212b, 212c that pivotably receive the respective links 118a, 118b, 118c. The input spherical bearing sockets 212a, 212b, 212c may be positioned equidistantly around the rotor 204. The input spherical bearing sockets 212a, 212b, 212c have a directional stop so that they only allow pivoting of the link (118a, 118b, 118c) in one circumferential direction.

The rotor 204 includes contact attachments 226a, 226b for attaching to the contacts 222.

Referring to Figure 5, shown therein is a link 208 of the linkage system of Figures 2A and 2B. The link 208 includes a first spherical bearing ball 228a, and a second spherical bearing ball 228b. The link 208 may be symmetrical. The link 208 includes a connecting element (e.g., shaft) 230 that connects the first spherical bearing ball 228a to the second spherical bearing ball 228b. The first spherical bearing ball 228a is rotatably positioned in the corresponding spherical bearing socket (e.g., 210a) of the translator 202. The second spherical bearing ball 228b is rotatably positioned in the corresponding spherical bearing socket (e.g., 212a) of the rotor 204. The link 208 may have a dog bone shape. The spherical bearing balls 228a, 228b may operate in compression and may be capable of reacting tension due to undercuts in the spherical bearing sockets of the translator 202 and rotor 204.

Referring to Figure 6, shown therein is a slider 218 of the linkage system of Figures 2A and 2B. The slider 218 includes a translator attachment 232 that attaches to the slider attachment 224a, 224b, 224c of the translator 202. The slider 218 includes a sliding surface 234 for sliding on a surface of a channel 236. The sliders 218 constrain the translator.

Referring to Figure 7, shown therein is the channel 236 of the linkage system of Figures 2A and 2B. The channel 236 includes a surface 238 that slides around the sliding surface 234 of the slider 218.

In further embodiments, spherical bearings are arranged "radially" instead of "axially" as shown herein. In further embodiments, spherical bearings are implemented with universal joints instead of ball/socket joints. In further embodiments, rotor and translator are non-annular (e.g. square).

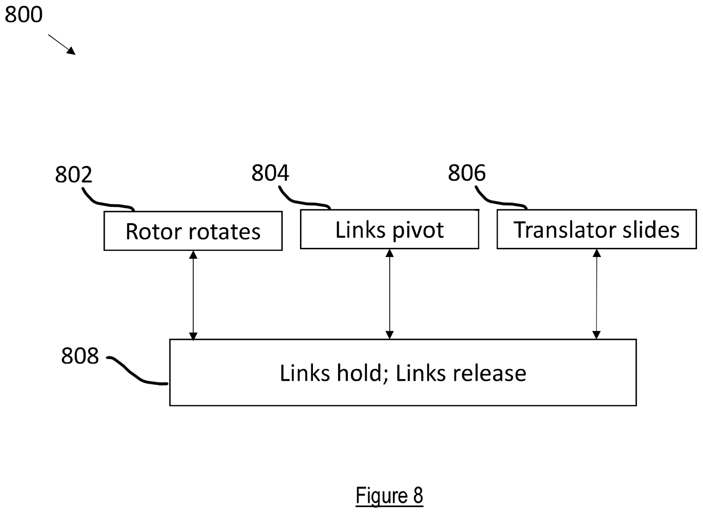

Figure 8 illustrates a linkage method 800, in accordance with an embodiment. At 802, a rotor about a direction of motion of a translator to separate the translator from the rotor. At 804 links pivot away from the rotor and the translator as the translator moves linearly away from the rotor. At 808 the links hold the rotor and the translator in a separated position.

The method 800 may be reversed to collapse the linkage cam. At 808, the links release from the rotor and the translator. At 802, the rotor rotates with respect to the translator in an opposite direction than the first direction. At 804 the links pivot to the rotor and the translator. At 806, the translator slides towards the rotor.

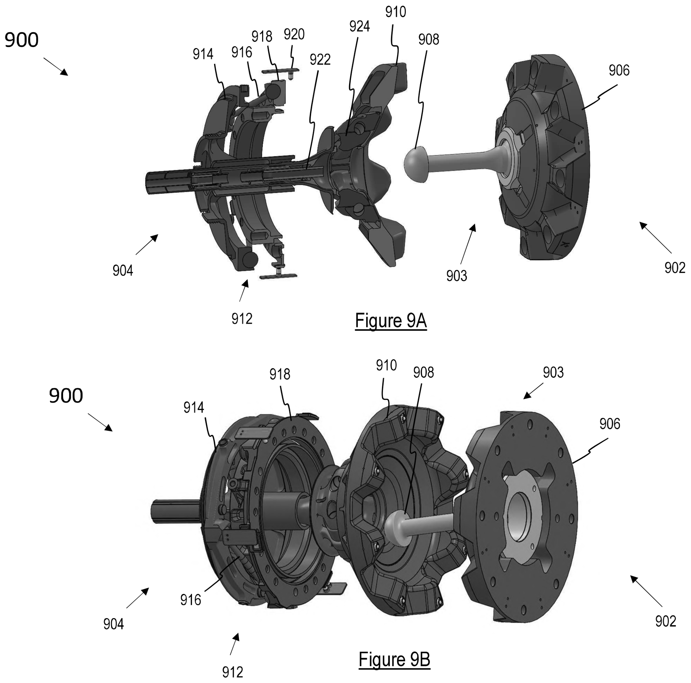

Referring now to Figures 9A - 9J illustrated therein is a robotic interface system 900, in accordance with an embodiment. The robotic interface system 900 includes a first side 902 that may be on a payload to be picked up. The robotic interface system 900 includes a second side 904 that may be attached to a robotic arm. The first side 902 and second side 904 form an interface that are to mate together.

The first side 902 includes a grapple fixture 903. The grapple fixture 903 includes a coupling 906 and a probe 908. The second side 904 includes an end effector 910 that grapples with the grapple fixture 903.

The second side 904 includes the linkage system 912 that includes a translator 914, links 916 and a rotor 918 (as similarly described above).

The second side 904 includes sensor contacts 920 for sensing rotational position of the rotor 918.

The second side 904 includes a plunger 922 for sensing the probe 908.

The second side 904 includes jaws 924 for grasping the probe 908.

At Figure 9A, the end effector 910 hovers over the grapple fixture 903.

At Figure 9B, contact operations begin and the probe 908 is funneled into the end effector 910.

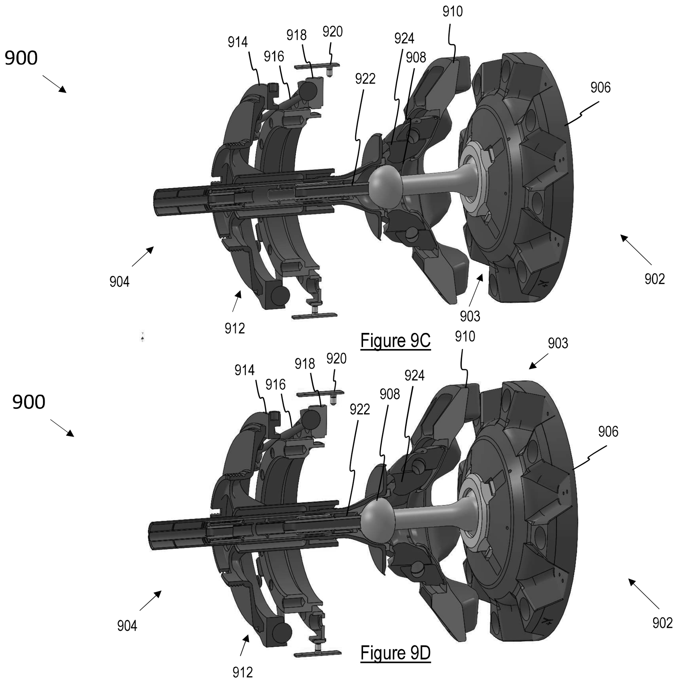

At Figure 9C, the end effector 910 detect the presence of the probe 908 via the plunger 922. A probe present state achieved.

At Figure 9D, the end effector 910 is sufficiently engaged with the probe 908 to allow the jaws 924 to close. A ready-to-soft-capture state achieved.

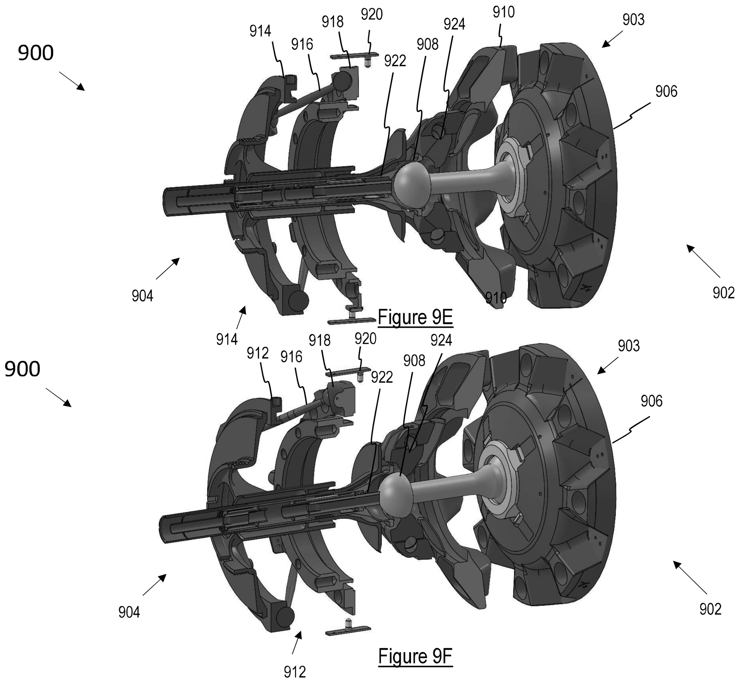

At Figure 9E, the linkage system 912 begins to actuate and the jaws 924 close completely. A soft capture state achieved.

At Figure 9F, actuation of the linkage system 912 continues and the end effector 910 and grapple fixture 903 are drawn together.

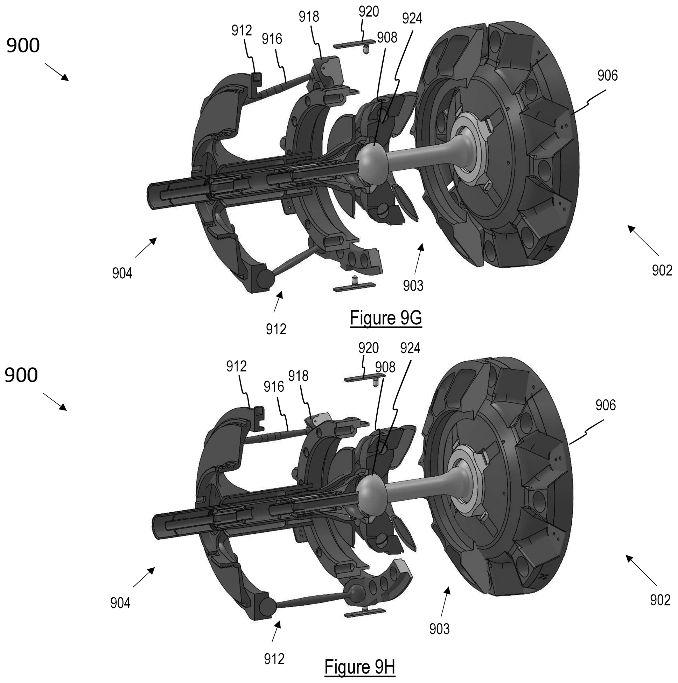

At Figure 9G, the end effector 910 engages with couplings 906 on the grapple fixture 903. The end effector 910 and grapple fixture 903 may include complementary couplings 906 that constrain their relative poses in six degrees of freedom. A topological capture state is achieved.

At Figure 9H, the linkage system 912 reaches top-dead-center, and rigidization preload is achieved. However, the mechanism is not stable and motor torque is applied to maintain the state.

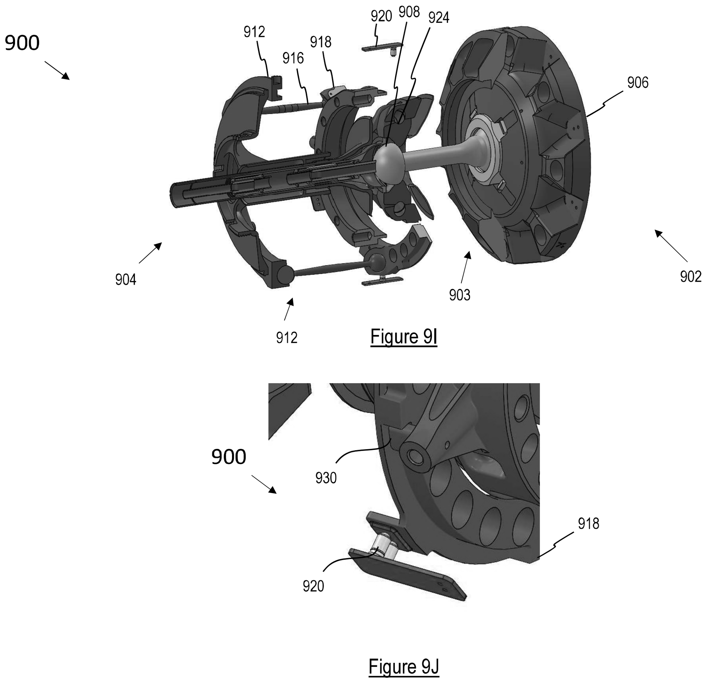

At Figure 9I, the linkage system 912 passes beyond top-dead-center and the translator 914 motion reverses and the preload decreases slightly. The rotor 918 reaches hard stop and prevents further retrograde motion of the translator 914. A rigidized and locked state achieved. The system 900 is passively stable without torque from a motor or another source.

Figure 9J shows a view of a rotor hard stop 930 and rotor state sensors 920. The state sensors 920 may be pogo pins connected by a conductive trace mounted to the rotor 918 in rigidized and locked state.

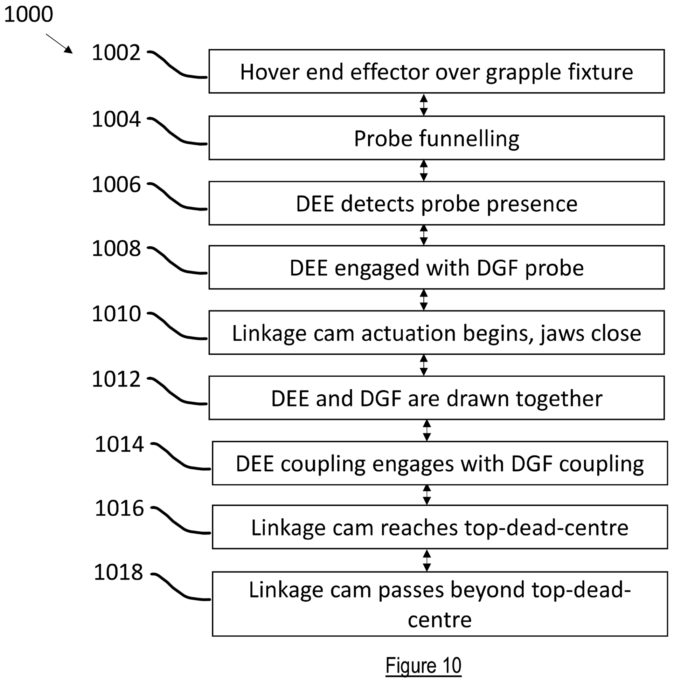

Figure 10 illustrates a robotic mating method 1000, in accordance with an embodiment.

At 1002, an end effector is hovered over a grapple fixture.

At 1004, contact operations begin and a probe is funneled.

At 1006, the end effector detects a probe presence via a plunger. Probe present state achieved.

At 1008, the end effector is sufficiently engaged with the grapple fixture probe to allow jaws to close. Ready-to-soft-capture state achieved.

At 1010, linkage cam actuation begins, jaws close. Soft capture state is achieved.

At 1012, actuation continues, and the end effector and the grapple fixture are drawn together.

At 1014, the end effector coupling engages with grapple fixture coupling, constraining their relative poses in six degrees of freedom. Topological capture state achieved.

At 1016, the linkage cam reaches top-dead-center. Rigidization preload is achieved, but the mechanism is not stable (motor torque maintains state).

At 1018, the linkage cam passes beyond top-dead-center and translator motion reverses. Preload decreases slightly. Rotor reaches hard stop, preventing further retrograde motion of translator. Rigidized and locked state achieved. The system is passively stable without torque from motor.

While the above description provides examples of one or more apparatus, methods, or systems, it will be appreciated that other apparatus, methods, or systems may be within the scope of the claims as interpreted by one of skill in the art.

## Claims

1. A system for converting rotational motion to linear motion, the system comprising:
a rotor;
a translator, wherein the translator translates axially along a rotation axis of the rotor; and
a plurality of linkages arranged around the rotation axis on a linkage system that connect the rotor to the translator and that translate rotation of the rotor into translation of the translator.

2. The system of claim 1, wherein a linkage in the plurality of linkages includes a link that connects the rotor to the translator;
wherein the linkage includes an input spherical bearing that pivotably connects the link to the rotor; and
wherein the linkage includes an output spherical bearing that pivotably connects the link to the output translator.

3. The system of claim 2, wherein rotating the rotor about a rotation axis relative to the translator causes the link to reconfigure from a planar arrangement towards a parallel arrangement.

4. The system of claim 2, wherein the link passes over-center before rotation of the rotor is arrested by a hard stop, inhibiting further retrograde translation of the translator.

5. The system of claim 1, wherein the rotor is actuated by a motor, and wherein the motor drives rotation of the input rotor via a drive mechanism.

6. The system of claim 1, wherein the translator includes a slider that inhibits the translator from rotating and allows the translator to slide axially.

7. The system of claim 1, wherein the rotor and/or the translator includes state sensing electrical contacts.

8. The system of claim 2, wherein the link includes a first spherical bearing ball, a second spherical bearing ball, and a connecting shaft that connects the first spherical bearing ball to the second spherical bearing ball;
wherein the first spherical bearing ball is rotatably positioned in a corresponding spherical bearing socket of the translator; and
wherein the second spherical bearing ball is rotatably positioned in a corresponding spherical bearing socket of the rotor.

9. A system comprising:
a first object that connects with a second object at a separable interface; and
the system of any one of claims 1 to 8 .

10. The system of claim 9, wherein the first object is an end effector; and the second object is a grapple fixture.

11. A method for converting rotational motion to linear motion using the system of any one of claims 1 to 10, the method comprising:
rotating the rotor about a direction of motion of the translator to separate the translator from the rotor; and
pivoting links away from the rotor and the translator as the translator moves linearly away from the rotor.

12. The method of claim 18 further comprising:
sliding the translator away from the rotor; and
holding the links in the rotor and the translator to a separated position.

13. The method of claim 18 further comprising:
rotating the rotor with respect to the translator in an opposite direction than the first direction;
pivoting the links towards the rotor and the translator; and
sliding the translator slides towards the rotor.
